# EUROPEAN PATENT APPLICATION

(11) **EP 3 482 906 A1**
(43) Date of publication of application: **15.05.2019**
(21) Application number: 18204227.5
(22) Date of filing: 04.11.2018
(51) Int. Cl.: B29C 45/60, B30B 11/24, B29C 48/60, B29C 48/65, B29C 48/66

(54) **SCREW FOR EXTRUSION MOLDING MACHINE AND INJECTION MOLDING MACHINE**

(30) Priority: 08.11.2017 KR 20170148127 U
(71) Applicant: Joo, Sang Kyu, Siheung-si, Gyeonggi-do (KR); Joo, Hee Young, Siheung-si, Gyeonggi-do (KR); Joo, Hyoung Chan, Siheung-si, Gyeonggi-do (KR)
(72) Inventor: JOO, Sang Kyu, Siheung-si (KR)
(74) Representative: Ruzzu, Giammario

(57) **Abstract**

The present invention relates to a screw for an extrusion molding machine and an injection molding machine that is adapted to be inserted into a cylinder to convey a molding material injected from a hopper and heated to a molten state by means of a heater, and more particularly, to a screw that includes a wide width spiral portion (15) formed on the frontmost end periphery of a spiral portion (12) of a screw shaft in such a manner as to have a spiral blade having a wide width to prevent shaking and to reduce friction and abrasion against the inner peripheral wall of the cylinder to ensure a longer term operation than the conventional screw.

## Description

### Technical Field

The present invention relates to a screw for an extrusion molding machine and an injection molding machine, and more particularly, to a screw for an extrusion molding machine and an injection molding machine that is configured to allow a spiral blade on the end periphery of the front side thereof to be formed to a wide width, thereby preventing shaking and minimizing friction and abrasion against the inner peripheral wall of a cylinder to ensure a long term operation.

### Background Art

Generally, an extrusion or injection molding machine is configured to allow a molding material to be injected into a cylinder through a hopper, heated by a heater, and conveyed in a molten state by means of a screw, thereby repeatedly molding products by means of a mold located on the front side of the cylinder.

The screw used for the extrusion or injection molding machine is provided with a spiral portion having a spiral blade formed on the outer peripheral surface thereof. According to the shape of the spiral portion, the screw may have various structures, and for example, the screw is functionally divided into a supply portion for supplying the molding material, a compression portion for compressing the molding material, and a metering portion for metering and extruding the molding material per unit time.

Such conventional screw for the extrusion or injection molding machine, which has a long length, is inserted into the cylinder, and since a rotating force is applied from the rear side of the screw, a free end portion is formed on the end periphery of the front side of the screw, without having any separate support structure, so that upon the rotation of the screw, shaking is most seriously generated from the end periphery of the front side of the screw.

According to the conventional screw for the extrusion or injection molding machine, shaking is most seriously generated from the end periphery of the front side of the screw upon the rotation of the screw to seriously cause friction and abrasion of the screw against the inner peripheral wall of the cylinder, thereby making the spiral portion on the frontmost end position of the screw and the inner peripheral wall of the cylinder damaged to greatly lower their durability.

### Prior art documents

### Patent documents

(Patent document 1) Korean Patent No.10-0827251 (issued on April 28, 2008)
(Patent document 2) Korean Patent No.10-1030770 (issued on April 15, 2011)

### Disclosure

### Technical Problem

Accordingly, the present invention has been made in view of the above-mentioned problems occurring in the prior art, and it is an object of the present invention to provide a screw for an extrusion molding machine and an injection molding machine that is configured to allow a spiral blade on the end periphery of the front side thereof to be formed to a wide width, thereby preventing shaking and minimizing friction and abrasion against the inner peripheral wall of a cylinder to ensure a long term operation.

### Technical Solution

To accomplish the above-mentioned object, according to the present invention, there is provided a screw for an extrusion molding machine and an injection molding machine, which is adapted to be inserted into a cylinder to convey a molding material injected from a hopper and heated to a molten state by means of a heater through a spiral portion formed on the outer periphery of a screw shaft, the spiral portion being formed of a spiral blade, the screw including a wide width spiral portion formed on the frontmost end periphery of the spiral portion of the screw shaft in such a manner as to have the spiral blade having a wide width to prevent shaking and to reduce friction and abrasion against the inner peripheral wall of the cylinder.

According to the present invention, desirably, the screw further includes a wide width spiral portion formed on the center of the spiral portion in such a manner as to have a wide width in preparation for a pressure generated during the molding material in the molten state is conveyed.

### Advantageous Effects

According to the present invention, the screw according to the present invention is configured to have the wide width spiral portion formed on the end periphery of the front side of the screw shaft inserted into the cylinder to convey the molding material to a molten state, so that when compared with the conventional screws, shaking of the screw can be prevented more reliably and the friction and abrasion of the screw against the inner peripheral wall of the cylinder can be more minimized, thereby more extending the life term than the conventional screws.

In addition, the screw according to the present invention is configured to have another wide width spiral portion formed on the center portion of the screw shaft in such a manner as to be prepared for the pressure generated toward the rear side thereof when the molding material in the molten state is extrudedly conveyed by means of the screw portion, thereby more improving the durability of the spiral portion than the conventional screws.

### Brief Description of Drawings

FIG.1 is a front view showing a molding machine to which a screw according to the present invention is applied.
FIG.2 is a front view showing the screw according to the present invention.
FIG.3 is an enlarged view showing a portion "A" of FIG.2.
FIG.4 is an enlarged view showing a portion "B" of FIG.2.

### Mode for Invention

Hereinafter, the present invention will be in detail given with reference to the attached drawing.

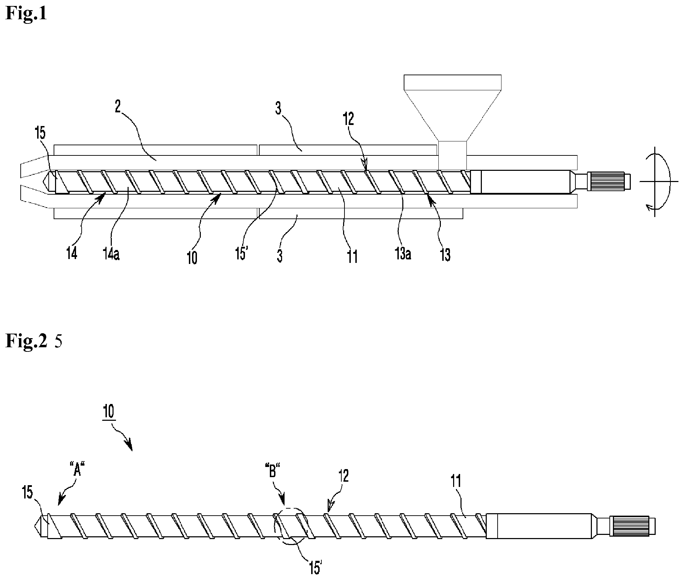

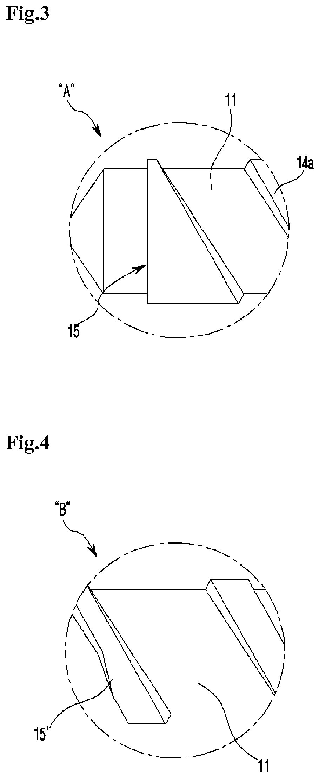

As shown in FIGS.1 to 4, a screw for an extrusion molding machine and an injection molding machine according to the present invention, which is inserted into a cylinder 2 to convey a molding material injected from a hopper and heated to a molten state by means of a heater 3 through a spiral portion 12 formed on the outer periphery of a screw shaft 11, and the spiral portion 12 is formed of a spiral blade.

The spiral portion 12 serves to convey the molding material from the rear side thereof to the front side thereof, while the solid type of molding material is being gradually molten, and finally, the spiral portion 12 supplies the molding material in a completely molten state from the front side thereof.

Particularly, the spiral portion 12 of the screw shaft 11 includes a wide width spiral portion 15 formed to a wide width on the frontmost end periphery thereof, thereby preventing shaking of the screw and reducing the friction and abrasion of the screw against the inner peripheral wall of the cylinder 2.

In detail, the screw according to the present invention is configured to have the wide width spiral portion 15 formed on the end periphery of the front side of the screw shaft 11, on which vibrations are most seriously generated upon the rotation of the rear side of the screw having a long length, so that shaking of the screw can be prevented and friction and abrasion of the screw against the inner peripheral wall of the cylinder 2 can be minimized.

Desirably, the size of the spiral blade on the wide width spiral portion 15 is larger by at least two or more times than that on the general spiral portion 12.

According to the present invention, the molding material is injected into the cylinder 2 through the hopper. The molding material injected into the cylinder 2 is heated by means of the heater 2 and is thus molten. Through the rotation of the screw shaft 11, next, the molding material being changed gradually to the molten state is conveyed from the rear side of the screw to the front side thereof by means of the spiral portion 12 having the spiral blade formed on the outer peripheral surface of the screw.

In detail, the molding material in a solid state is injected into the cylinder 2 and is conveyed in a gradually molten state by means of the spiral portion 12 from the rear side of the screw to the front side of the screw, so that the molding material in a completely molten state is extrudedly supplied.

At this time, the wide width spiral portion 15 is formed on the end periphery of the front side of the screw shaft 11, that is, on the frontmost position wherein shaking is most seriously generated upon the rotation of the rear side of the screw shaft 11 having a long length, thereby providing a higher support force than the support force in the general structure having only the spiral portion. As a result, the shaking of the screw can be prevented and the friction and abrasion of the screw against the inner peripheral wall of the cylinder 2 can be remarkably reduced, thereby improving the durability of the screw and the cylinder.

In addition to the frontmost end periphery of the screw, on the other hand, the screw according to the present invention has a wide width spiral portion 15' formed on the center of the spiral portion 12 in such a manner as to have a wide width in preparation for a pressure generated during the molding material in the molten state is conveyed, and in this case, desirably, a size of the wide width spiral portion 15' is smaller than that of the wide width spiral portion 15 formed on the front end periphery of the screw.

In detail, the wide width spiral portion 15' is prepared for the pressure generated from the rear side of the screw in the process where the molding material is extrudedly conveyed in a gradually molten state from the rear side of the screw to the front side of the screw.

According to the present invention, the screw conveys the molding material in the solid state injected into the cylinder 2 from the rear side thereof to the front side thereof, while the molding material is being gradually molten. Especially, as the molding material on the front side of the screw is extrudedly supplied in the completely molten state from the front side of the screw, the pressure applied to the spiral portion on the center of the screw is drastically increased, and accordingly, the wide width spiral portion 15' is formed on the center of the spiral portion 12 of the screw in such a manner as to be prepared for the pressure drastically increased on the center position of the spiral portion 12, thereby greatly improving the durability of the spiral portion 12.

As described above, the screw according to the present invention is configured to have the wide width spiral portion formed on the end periphery of the front side of the screw shaft inserted into the cylinder to convey the molding material to a molten state, so that when compared with the conventional screws, the shaking of the screw can be prevented more reliably and the friction and abrasion of the screw against the inner peripheral wall of the cylinder can be more minimized. In addition, the screw according to the present invention is configured to have another wide width spiral portion formed on the center portion of the screw shaft in such a manner as to be prepared for the pressure generated toward the rear side thereof when the molding material in the molten state is extrudedly conveyed by means of the screw portion, thereby more improving the durability of the spiral portion than the conventional screws.

## Claims

1. A screw for an extrusion molding machine and an injection molding machine, which is adapted to be inserted into a cylinder (2) to convey a molding material injected from a hopper and heated to a molten state by means of a heater (3) through a spiral portion (12) formed on the outer periphery of a screw shaft (11), the spiral portion (12) being formed of a spiral blade, the screw comprising a wide width spiral portion (15) formed on the frontmost end periphery of the spiral portion (12) of the screw shaft (11) in such a manner as to have the spiral blade having a wide width to prevent shaking and to reduce friction and abrasion against the inner peripheral wall of the cylinder (2).

2. The screw according to claim 1, further comprising a wide width spiral portion (15') formed on the center of the spiral portion (12) in such a manner as to have a wide width in preparation for a pressure generated during the molding material in the molten state is conveyed.
